# EUROPÄISCHE PATENTSCHRIFT

(11) **EP 4 076 822 B1**
(45) Veröffentlichungstag und Bekanntmachung des Hinweises auf die Patenterteilung: **12.07.2023**
(21) Anmeldenummer: 20800629.6
(22) Anmeldetag: 02.11.2020
(51) Int. Cl.: B23K 20/10, B23K 20/233

(54) **SCHWEISSVORRICHTUNG SOWIE SCHWEISSVERFAHREN ZUR HERSTELLUNG EINER STOFFSCHLÜSSIGEN VERBINDUNG ZWISCHEN EINEM LEITER UND EINEM ANSCHLUSSTEIL**
WELDING DEVICE AND WELDING METHOD FOR PRODUCING AN INTEGRALLY BONDED CONNECTION BETWEEN A CONDUCTOR AND A CONNECTION PART
DISPOSITIF DE SOUDAGE ET PROCÉDÉ DE SOUDAGE POUR RÉALISER UNE CONNEXION LIÉE D'UN SEUL TENANT ENTRE UN CONDUCTEUR ET UNE PIÈCE DE LIAISON

(30) Priorität: 17.12.2019 DE 102019134763
(43) Veröffentlichungstag der Anmeldung: 26.10.2022
(73) Patentinhaber: Auto-Kabel Management GmbH, 79688 Hausen i.W. (DE)
(72) Erfinder: SEBETLELA, Kabelo, 79539 Lörrach (DE)
(74) Vertreter: Cohausz & Florack
(86) Internationale Anmeldenummer: PCT/EP2020/080621
(87) Internationale Veröffentlichungsnummer: WO 2021/121752

(56) Entgegenhaltungen:
- WO-A1-2018/177616
- WO-A1-2018/210603
- JP-A- 2006 181 623
- US-A1- 2006 169 388
- US-A1- 2016 052 081

## Beschreibung

Der Gegenstand betrifft eine Schweißvorrichtung sowie ein Schweißverfahren zur Herstellung einer stoffschlüssigen Verbindung zwischen einem Leiter und einem Anschlussteil, mit zumindest einem Ultraschallschweißwerkzeug, insbesondere mit zumindest einer Sonotrode oder zumindest einem Amboss, wobei zumindest ein Teil einer Kontaktfläche des Anschlussteils zumindest einen Teil einer Kontaktfläche des Ultraschallschweißwerkzeugs kontaktiert. Die vorgenannte Schweißverbindung zwischen Leiter und Anschlussteil wird insbesondere in automotiven Anwendungen zum Einsatz kommen, vorzugsweise bei der Verbindung von Leitern, insbesondere Flachleitern, mit Anschlussteilen, insbesondere mit Flachteilen.

Das Verschweißen von Leitern und Anschlussteilen miteinander mittels Ultraschallschweißverfahren ist hinlänglich bekannt. Bei einem Ultraschallschweißverfahren wird eine Ultraschallschwingung durch eine Sonotrode in eines der miteinander zu verschweißenden Bauteile eingebracht. Diese Ultraschallschwingung führt zu einer Relativbewegung der beiden zu verschweißenden Bauteile an ihrer Kontaktfläche zueinander. Durch diese Relativbewegung kommt es zu einer Reibung und letztendlich zu einem Verschweißen der Oberflächen der beiden zu verschweißenden Bauteile an einer Schweißfläche miteinander.

Diese Art des Verschweißens ist insbesondere beim Verschweißen von Aluminiumkontaktteilen sinnvoll, da beim Verschweißen mittels Ultraschall eine Aluminiumoxidschicht an der Berührfläche zwischen den zu verschweißenden Bauteilen aufgebrochen wird. Durch das Ultraschallverschweißen plastifiziert zumindest eines der beiden miteinander zu verschweißenden Bauteile an der Kontaktfläche und es kommt zu einem Stoffschluss.

Bei den aus dem Stand der Technik bekannten Ultraschallschweißverfahren sowie Ultraschallschweißvorrichtungen ist es üblich, ein Anschlussteil zunächst auf einem Ultraschallschweißwerkzeug, insbesondere auf einer Sonotrode oder auf einem Amboss, anzuordnen und das Anschlussteil anschließend mittels Kraftschluss auf dem Ultraschallschweißwerkzeug, insbesondere auf einem unteren Ultraschallschweißwerkzeug, zu fixieren. Ein solches Verfahren ist allerdings insofern nachteilig, als dass es produktionsbedingte Fertigungstoleranzen des Anschlussteils nur in geringem Maße ausgleichen kann. Die produktionstechnisch auftretenden Fertigungstoleranzen der zu verschweißenden Anschlussteile führen dazu, dass eine wiederholbare Positionierung der Anschlussteile auf dem Ultraschallschweißwerkzeug nur unzulänglich möglich ist.

Des Weiterem kann für das Verschweißen von Anschlussteilen und Leitern die verwendete Schweißmethode in Abhängigkeit des Schweißwegs gewählt werden. Dabei kann der Schweißweg als diejenige Distanz definiert werden, die von dem Ultraschallschweißwerkzeug von dem ersten Kontakt mit dem Leiter und/oder dem Anschlussteil bis zum Ende des Schweißzyklus zurückgelegt wird. Der Schweißweg kann dabei in Abhängigkeit der Härte und der Steifigkeit der verwendeten Fügepartner beispielsweise so niedrig wie 0,2 mm sein. Aufgrund der produktionsbedingten Fertigungstoleranzen der Anschlussteile und/oder der Leiter kann der Schweißweg um bis zu 0,3 mm im Vergleich zu einem Anschlussteil mit einer vollständig flachen Kontaktfläche und/oder einem Leiter mit einer vollständig flachen Kontaktfläche abweichen. Es ist somit für die Prozesssicherheit und Prozesswiederholbarkeit des Ultraschallschweißprozesses kritisch, dass derartige Abweichungen des Schweißweges vermieden werden.

Des Weiteren ist es üblich, dass die Anschlussteile mittels Kraftschluss auf dem Ultraschallschweißwerkzeug fixiert werden. Dies wird in der Regel mittels Einspannen der Anschlusselemente bewerkstelligt, wobei zumindest zwei nicht zu verschweißende Oberflächen des Anschlussteils mittels Pressmitteln eingespannt werden. Diese Oberflächen des Anschlussmittels sind ebenfalls nicht vollständig eben, sondern weisen bestimmte prozessbedingte Fertigungstoleranzen und/oder Oberflächenrauheiten auf, so dass hierdurch die positionsbedingte Abweichung der Anschlussteile auf dem Ultraschallwerkzeug weiter verstärkt wird.

Die Veröffentlichung WO 2018/177616 betrifft eine Verbindung eines Anschlussteils mit einer Litzenleitung sowie ein Verfahren zum Verbinden eines Anschlussteils mit einer Litzenleitung.

Die Veröffentlichung DE 10 2006 021 422 bezieht sich auf ein Verfahren zum Herstellen eines Durchgangs- oder Endknotens aus elektrischen Leitern.

Die Veröffentlichung WO 2005/091439 betrifft ein Verfahren zur Verbindung eines aus Kupfer oder aus einer Kupferlegierung bestehenden Anschlusselements für ein Kabel.

Ausgehend von diesem Stand der Technik lag dem Gegenstand somit die Aufgabe zugrunde, eine Schweißvorrichtung sowie ein Schweißverfahren anzugeben, mit welchen ein reproduzierbares und prozesssicheres Verschweißen eines Anschlussteils mit einem Leiter ermöglicht wird.

Diese Aufgabe wird gegenständlich durch eine Schweißvorrichtung nach Anspruch 1 und durch ein Schweißverfahren nach Anspruch 8 gelöst.

Eine Schweißvorrichtung zur Herstellung einer stoffschlüssigen Verbindung zwischen einem Leiter und einem Anschlussteil, mit zumindest einem Ultraschallschweißwerkzeug, wobei zumindest ein Teil einer Kontaktfläche des Anschlussteils zumindest einen Teil einer Kontaktfläche des Ultraschallschweißwerkzeugs kontaktiert, ist hinlänglich bekannt.

Bei einer derartigen Vorrichtung wird ein Ultraschallschweißwerkzeug, insbesondere eine Sonotrode oder ein Amboss, auf ein weiteres Ultraschallschweißwerkzeug, insbesondere auf einen Amboss oder auf eine Sonotrode, bewegt. Die Sonotrode wird über einen Ultraschallkonverter und einen optionalen Booster mit Ultraschallschwingung angeregt. Mit Hilfe der Anpresskraft der Sonotrode oder des Amboss auf das Anschlussteil oder den Leiter wird die Ultraschallschwingung in das Anschlussteil oder den Leiter eingebracht. Im Bereich der in Kontakt stehenden Kontaktflächen des Anschlussteils und des Leiters kommt es zu einer Verschweißung.

Zum Aufbringen der Anpresskraft, mit deren Hilfe ein Einbringen der Ultraschallschwingung möglich ist, wird die Sonotrode mittels einer Vorschubeinrichtung in Richtung des Amboss bewegt. Auch ist es möglich, dass die Sonotrode fest ist und der Amboss in Richtung der Sonotrode bewegt ist. Insofern wird eine Vorschubeinrichtung, mit der die Sonotrode und der Amboss relativ zueinander beweglich sind, vorgeschlagen. Die lineare Bewegung der Vorschubeinrichtung führt bevorzugt zu zwei Endpositionen, nämlich eine Offenposition und eine finale Schweißposition. Zwischen diesen beiden Positionen sind Sonotrode und Amboss relativ zueinander beweglich.

Als Kontaktflächen des Anschlussteils und des Ultraschallschweißwerkzeugs wird vorliegend diejenige Oberfläche definiert, die dazu ausgebildet ist, mit dem Ultraschallschweißwerkzeug oder dem Anschlussteil in Kontakt zu stehen. Zumindest Teile dieser Kontaktflächen sind derart gebildet, dass sie im Wesentlichen zueinander korrespondierende Profilierungen aufweisen und/oder sind derart gebildet, dass sie zumindest teilweise formschlüssig ineinander greifen können.

Eine Profilierung im Sinne der Anmeldung ist jede Oberflächenbeschaffenheit, die über übliche Oberflächentoleranzen und/oder übliche Oberflächenrauheiten der Kontaktflächen des Ultraschallschweißwerkzeugs und/oder des Anschlussteils hinausgeht. Bevorzugt ist hierbei, dass die Profilierungen des Anschlussteils und des Ultraschallschweißwerkzeugs derart gebildet sind, dass die Profilierungen zumindest teilweise formschlüssig ineinander greifen und/oder im Wesentlichen zueinander korrespondieren.

Hierdurch kann die wirksame, in Kontakt stehende Oberfläche zwischen Anschlussteil und Ultraschallschweißwerkzeug im Vergleich zu aus dem Stand der Technik bekannten ebenen Kontaktflächen des Anschlussteils und des Ultraschallschweißwerkzeugs während des Schweißprozesses vergrößert werden, so dass die Prozessgenauigkeit des Schweißprozesses erhöht werden kann. Insbesondere aufgrund der zueinander korrespondierenden Profilierungen und/oder durch das formschlüssige Ineinandergreifen von Anschlussteil und Ultraschallschweißwerkzeug kann ein Schweißverfahren bzw. eine Schweißvorrichtung zur Verfügung gestellt werden, die robust gegenüber produktionsbedingten Fertigungstoleranzen des Anschlussteils ist. Insbesondere kann eine Varianz des Schweißwegs verringert werden, so dass eine prozesssichere und zuverlässige Verschweißung von Anschlussteil und Leiter ermöglicht wird.

Dabei ist es bevorzugt, dass die zueinander korrespondierende Profilierungen zumindest eines Teils der Kontaktfläche des Anschlussteils und des zumindest einen Teils der Kontaktfläche des Ultraschallschweißwerkzeugs derart ausgestaltet sind, dass die Profilierungen prozessgünstig zu fertigen sind und zudem zu einer höheren Prozessgenauigkeit bei der Verschweißung von Anschlussteil und Leiter führen. Beispielsweise können die Profilierungen gezackt gebildet und/oder dreieckförmig gestaltet sein.

Gemäß einem Ausführungsbeispiel wird vorgeschlagen, dass die Profilierungen durch im Wesentlichen zueinander korrespondierenden wellenförmigen Profilierungen zumindest eines Teils der Kontaktflächen des Anschlussteils und des Ultraschallschweißwerkzeugs gebildet sind. Wellenförmige Profilierungen sind in konstruktiver Hinsicht günstig zu fertigen und führen dazu, dass das Anschlusselement in zuverlässiger Weise auf dem Ultraschallschweißwerkzeug anordnenbar ist, wodurch eine prozesssichere Verschweißung zwischen Anschlussteil und Leiter ermöglicht wird.

Gemäß einem Ausführungsbeispiel wird vorgeschlagen, dass die Profilierungen durch im Wesentlichen zueinander korrespondierenden geriffelten Profilierungen zumindest eines Teils der Kontaktflächen des Anschlussteils und des Ultraschallschweißwerkzeugs gebildet sind. Geriffelte Profilierungen sind in konstruktiver Hinsicht günstig zu fertigen und führen dazu, dass das Anschlusselement in zuverlässiger Weise auf dem Ultraschallschweißwerkzeug anordnenbar ist, wodurch eine prozesssichere Verschweißung zwischen Anschlussteil und Leiter ermöglicht wird.

Gemäß einem Ausführungsbeispiel wird vorgeschlagen, dass der Leiter ein Flachleiter oder ein Bus-Bar ist und/oder dass das Anschlussteil ein Flachteil ist. Ein Flachleiter und/oder ein Flachteil weisen bevorzugt einen im Wesentlichen rechteckigen Querschnitt mit zwei Schmalseiten und zwei Breitseiten auf. Das Anschlussteil kann beispielsweise als Kabelschuh, als Crimpkontakt, als Anschlussfahne oder ebenfalls als Leiter ausgestaltet sein. Des Weiteren ist es bevorzugt, dass der Leiter, insbesondere der Flachleiter, einen isolierten Bereich und einen abisolierten Bereich aufweist, wobei zumindest ein Teil des abisolierten Bereichs des Leiters mit dem Anschlussteil verschweißt wird.

Gemäß einem Ausführungsbeispiel wird vorgeschlagen, dass das Anschlussteil aus einem Aluminiumwerkstoff oder einem Kupferwerkstoff gebildet ist, insbesondere dass das Anschlussteil aus einem Verbundmaterial gebildet ist. Des Weiteren ist es bevorzugt, dass der Leiter ein Aluminiumlitzenleiter ist. Das Ultraschallschweißverfahren ist insbesondere bei Fügepartnern vorteilhaft, die zumindest teilweise Aluminium umfassen, da beim Verschweißen mittels Ultraschall eine Aluminiumoxidschicht an der Berührfläche zwischen den zu verschweißenden Bauteilen aufgebrochen wird.

Gemäß einem Ausführungsbeispiel wird vorgeschlagen, dass die Schweißvorrichtung ein weiteres Ultraschallschweißwerkzeug aufweist, dass zumindest ein Teil einer Kontaktfläche des weiteren Ultraschallschweißwerkzeugs zumindest einen Teil einer Kontaktfläche des Leiters kontaktiert und dass der zumindest eine Teil der Kontaktfläche des weiteren Ultraschallschweißwerkzeugs und/oder der zumindest eine Teil der Kontaktfläche des Leiters eine weitere Profilierung. Bei dem weiteren Ultraschallschweißwerkzeug kann es sich dabei um eine Sonotrode oder um einen Amboss handeln. Durch das Vorsehen der Profilierung und/oder der Profilierungen kann ein reproduzierbares Schweißverfahren zur Verfügung gestellt werden, welches eine ausreichende Prozesssicherheit aufweist. Bei dem Vorsehen von Profilierungen jeweils an zumindest einem Teil der Kontaktfläche des weiteren Ultraschallschweißwerkzeugs und an zumindest einem Teil der Kontaktfläche des Leiters ist es bevorzugt, dass die Profilierungen im Wesentlichen zueinander korrespondieren und/oder formschlüssig miteinander in Eingriff bringbar sind. Gemäß einem Ausführungsbeispiel wird vorgeschlagen, dass die weitere Profilierung und/oder die weiteren Profilierungen durch wellenförmige Profilierungen, durch gezackte Profilierungen oder durch geriffelte Profilierungen gebildet sind. Gezackte, geriffelte oder wellenförmige Profilierungen sind in konstruktiver Hinsicht günstig zu fertigen und führen dazu, dass das Anschlusselement in zuverlässiger Weise auf dem Ultraschallschweißwerkzeug anordnenbar ist, wodurch eine prozesssichere Verschweißung zwischen Anschlussteil und Leiter ermöglicht wird.

Gemäß einem Ausführungsbeispiel wird vorgeschlagen, dass das Anschlussteil kraftschlüssig auf dem Ultraschallschweißwerkzeug fixiert wird. Hierdurch kann eine genaue Positionierung des Anschlussteils auf dem Ultraschallschweißwerkzeug ermöglicht werden, wodurch eine zusätzliche Prozessgenauigkeit erreicht werden kann.

Nachfolgend wird der Gegenstand anhand einer Ausführungsbeispiele zeigenden Zeichnung näher erläutert. In der Zeichnung zeigen:
- Fig. 1: eine Ausführungsform einer nicht beanspruchten Schweißvorrichtung in einer schematischen Ansicht und
- Fig. 2: eine weitere Ausführungsform einer gegenständlichen Schweißvorrichtung gemäß der Erfindung in einer schematischen Ansicht.

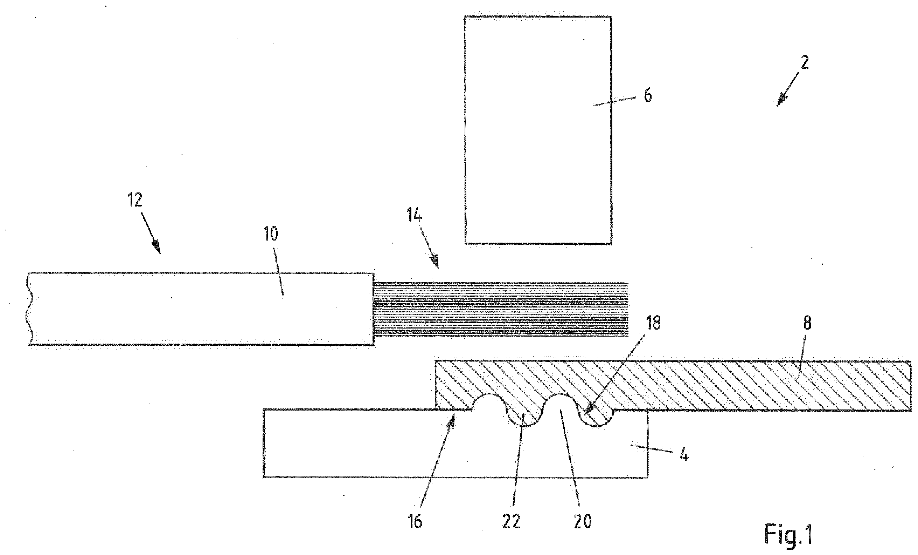

Fig. 1 zeigt eine Schweißvorrichtung 2 in einer schematischen Ansicht aufweisend ein unteres Ultraschallschweißwerkzeug 4 sowie ein oberes Ultraschallschweißwerkzeug 6. Das untere Ultraschallschweißwerkzeug 4 kann beispielsweise als Sonotrode und das obere Ultraschallschweißwerkzeug 6 als Amboss gebildet sein. Es ist ebenfalls möglich, dass das untere Ultraschallschweißwerkzeug 4 beispielsweise als Amboss und das obere Ultraschallschweißwerkzeug 6 als Sonotrode gebildet sind. Auf dem unteren Ultraschallschweißwerkzeug 4 ist ein Anschlussteil 8 angeordnet, welches mit einem Leiter 10 verschweißt wird. Der Leiter 10 weist einen isolierten Bereich 12 und einen abisolierten Bereich 14 auf.

Sowohl das Anschlussteils 8 als auch das untere Ultraschallschweißwerkzeug 4 weisen an ihren zueinander zeigenden Oberflächen Kontaktflächen 16 und 18 auf. An zumindest einem Teil der Kontaktflächen 16 und 18 weisen Anschlussteil 8 und unteres Ultraschallschweißwerkzeug 4 zueinander korrespondierende Profilierungen 20 und 22 auf. Die Profilierungen 20 und 22 sind wellenförmig ausgebildet und führen zu einem formschlüssigen Ineinandergreifen von Anschlussteil 8 und unterem Ultraschallschweißwerkzeug 4, wodurch die Prozessgenauigkeit während des Schweißverfahrens verbessert werden kann.

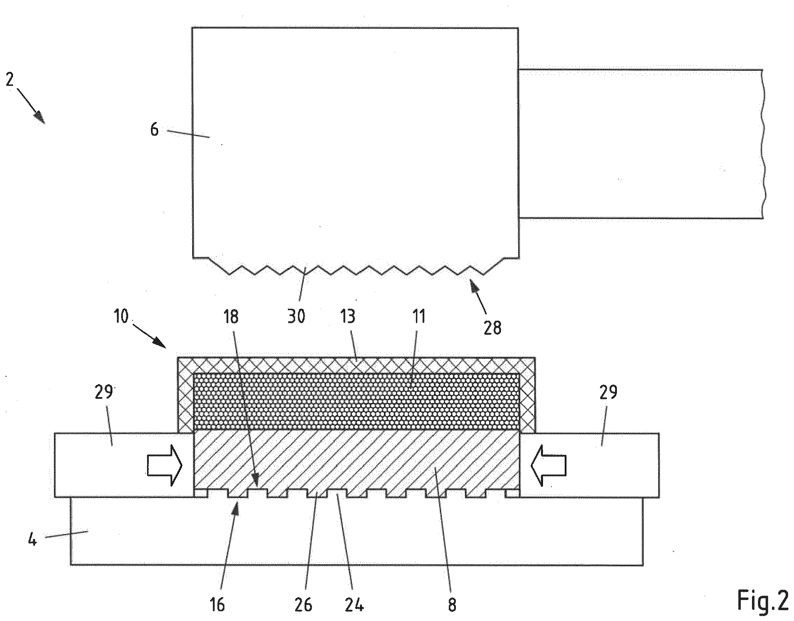

Fig. 2 zeigt eine Schweißvorrichtung 2 gemäß der Erfindung in einer schematischen Ansicht. Der Leiter 10 ist als Flachleiter ausgestaltet und weist einen Litzenleiter 11 mit einer Isolierung 13 auf, wobei die Isolierung 13 an der mit einem Anschlussteil 8 zu verschweißenden Seite entfernt ist. An zumindest einem Teil der Kontaktflächen 16 und 18 weisen Anschlussteil 8 und unteres Ultraschallschweißwerkzeug 4 zueinander korrespondierende Profilierungen 24 und 26 auf, wobei die Profilierungen 24 und 26 geriffelt gebildet sind.

Nach Anordnung des Anschlussteils 8 auf dem unteren Ultraschallschweißwerkzeug 4 wird das Anschlussteil 8 mithilfe von Pressmitteln 29 kraftschlüssig fixiert. Das obere Ultraschallschweißwerkzeug 6 weist an zumindest einem Teil seiner Kontaktfläche 28 eine gezackte Profilierung 30 auf, mit welcher Hilfe, der Leiter 10 während des Schweißprozesses zusätzlich fixiert werden kann.

## Patentansprüche

1. System zur Herstellung einer stoffschlüssigen Verbindung zwischen einem Leiter (10) und einem Anschlussteil (8),
- mit zumindest einem Ultraschallschweißwerkzeug (4), Pressmitteln (29) und zumindest einem Anschlussteil (8),
- wobei zumindest ein Teil einer Kontaktfläche (18) des Anschlussteils (8) zumindest einen Teil einer Kontaktfläche (16) des Ultraschallschweißwerkzeugs (4) kontaktiert, wobei,
- der zumindest eine Teil der Kontaktfläche (18) des Anschlussteils (8) und der zumindest eine Teil der Kontaktfläche (16) des Ultraschallschweißwerkzeugs (4) im Wesentlichen zueinander korrespondierende Profilierungen (20, 22, 24, 26) aufweisen und
- die Pressmittel (29) dazu eingerichtet sind, das Anschlussteil an zumindest zwei nicht zu verschweißenden Oberflächen des Anschlussteils kraftschlüssig auf dem Ultraschallwerkzeug (4) zu fixieren.

2. System nach Anspruch 1,
**dadurch gekennzeichnet,**
- **dass** die Profilierungen (20, 22, 24, 26) durch im Wesentlichen zueinander korrespondierenden wellenförmigen Profilierungen (20, 22) zumindest eines Teils der Kontaktflächen (16, 18) des Anschlussteils (8) und des Ultraschallschweißwerkzeugs (4) gebildet sind.

3. System nach Anspruch 1,
**dadurch gekennzeichnet,**
- **dass** die Profilierungen (20, 22, 24, 26) durch im Wesentlichen zueinander korrespondierenden geriffelten Profilierungen (24, 26) zumindest eines Teils der Kontaktflächen (16, 18) des Anschlussteils (8) und des Ultraschallschweißwerkzeugs (4) gebildet sind.

4. System nach einem der Ansprüche 1 bis 3,
**dadurch gekennzeichnet,**
- **dass** der Leiter (10) ein Flachleiter oder ein Bus-Bar ist und/oder
- **dass** das Anschlussteil (8) ein Flachteil ist.

5. System nach einem der Ansprüche 1 bis 4,
**dadurch gekennzeichnet,**
- **dass** das Anschlussteil (8) aus einem Aluminiumwerkstoff oder einem Kupferwerkstoff gebildet ist, insbesondere dass das Anschlussteil (8) aus einem Verbundmaterial gebildet ist.

6. System nach einem der Ansprüche 1 bis 5,
- mit zumindest einem Leiter (10),
**dadurch gekennzeichnet,**
- **dass** die Schweißvorrichtung (2) ein weiteres Ultraschallschweißwerkzeug (6) aufweist,
- **dass** zumindest ein Teil einer Kontaktfläche (28) des weiteren Ultraschallschweißwerkzeugs (6) zumindest einen Teil einer Kontaktfläche des Leiters (10) kontaktiert und
- **dass** der zumindest eine Teil der Kontaktfläche (28) des weiteren Ultraschallschweißwerkzeugs (6) und/oder der zumindest eine Teil der Kontaktfläche des Leiters (10) eine weitere Profilierung (30) aufweisen.

7. System nach Anspruch 6,
**dadurch gekennzeichnet,**
- **dass** die zumindest eine weitere Profilierung (30) und/oder die weiteren Profilierungen durch wellenförmige Profilierungen, durch gezackte Profilierungen oder durch geriffelte Profilierung gebildet sind.

8. Schweißverfahren zur Herstellung einer stoffschlüssigen Verbindung zwischen einem Leiter (10) und einem Anschlussteil (8),
- bei dem das Anschlussteil (8) auf zumindest einem Ultraschallschweißwerkzeug (4), angeordnet wird,
- wobei zumindest ein Teil einer Kontaktfläche des Ultraschallschweißwerkzeugs (4) und zumindest ein Teil einer Kontaktfläche des Anschlussteils (8) miteinander in Kontakt stehen,
- wobei zumindest Teile der Kontaktfläche des Anschlussteils (8) und zumindest Teile der Kontaktfläche des Ultraschallschweißwerkzeugs (4) zueinander korrespondierende Profilierungen aufweisen,
- bei dem zumindest ein Bereich des Anschlussteils (8) mit dem Leiter (10) mittels des Ultraschallschweißwerkzeugs (4) verschweißt wird, wobei
- dass der zumindest eine Teil der Kontaktfläche des Anschlussteils (8) und der zumindest eine Teil der Kontaktfläche des Ultraschallschweißwerkzeugs (4) zumindest teilweise formschlüssig ineinander greifen und
- dass das Anschlussteil (8) mittels Pressmitteln (29) an zumindest zwei nicht zu verschweißenden Oberflächen des Anschlussteils (8) kraftschlüssig auf dem Ultraschallschweißwerkzeug (4) fixiert wird.

## Claims

1. System for producing a material bond connection between a conductor (10) and a connecting part (8),
- with at least one ultrasonic welding tool (4), pressing tool (29) and at least one connecting part (8),
- wherein at least a part of a contact surface (18) of the connecting part (8) contacts at least a part of a contact surface (16) of the ultrasonic welding tool (4), wherein
- the at least one part of the contact surface (18) of the connecting part (8) and the at least one part of the contact surface (16) of the ultrasonic welding tool (4) have profilings (20, 22, 24, 26) corresponding substantially to one another and
- the pressing tool (29) is arranged for fixing, with a force fit, the connecting part onto the ultrasonic welding tool (4) with at least two surfaces of the connecting part not to be welded.

2. System according to claim 1,
**characterized in that**
- that the profilings (20, 22, 24, 26) are formed by substantially mutually corresponding wave-shaped profilings (20, 22) of at least part of the contact surfaces (16, 18) of the connecting part (8) and of the ultrasonic welding tool (4).

3. System according to claim 1,
**characterized in that**
- the profilings (20, 22, 24, 26) are formed by substantially mutually corresponding corrugated profilings (24, 26) of at least part of the contact surfaces (16, 18) of the connecting part (8) and of the ultrasonic welding tool (4).

4. System according to any one of claims 1 to 3,
**characterized in that**
- the conductor (10) is a flat conductor or a bus bar and/or
- the connecting part (8) is a flat part.

5. System according to any one of claims 1 to 4,
**characterized in that**
- the connecting part (8) is formed from an aluminum material or a copper material, in particular **in that** the connecting part (8) is formed from a composite material.

6. System according to any one of claims 1 to 5,
- with at least one conductor (10)
**characterized in that**
- the welding device (2) has a further ultrasonic welding tool (6),
- at least part of a contact surface (28) of the further ultrasonic welding tool (6) contacts at least part of a contact surface of the conductor (10), and
- the at least one part of the contact surface (28) of the further ultrasonic welding tool (6) and/or the at least one part of the contact surface of the conductor (10) have a further profiling (30).

7. System according to claim 6,
**characterized in that**
- the at least one further profiling (30) and/or the further profilings are formed by wave-shaped profilings, by serrated profilings or by fluted profilings.

8. Welding method for producing a material bond connection between a conductor (10) and a connecting part (8),
- in which the connecting part (8) is arranged on at least one ultrasonic welding tool (4),
- wherein at least a part of a contact surface of the ultrasonic welding tool (4) and at least a part of a contact surface of the connecting part (8) are in contact with each other, wherein
- at least one part of the contact surface of the connecting part (8) and the at least one part of the contact surface of the ultrasonic welding tool (4) have profilings corresponding to one another
- wherein at least a portion of the connecting part (8) is welded to the conductor (10) by means of the ultrasonic welding tool (4),
wherein
- the at least one part of the contact surface of the connecting part (8) and the at least one part of the contact surface of the ultrasonic welding tool (4) at least partially interlock and
- the connecting part (8) is fixed, with a force fit, the onto the ultrasonic welding tool (4) with at least two surfaces of the connecting part not to be welded by the pressing tool (29).

## Revendications

1. Système pour la fabrication d'une liaison par matière entre un conducteur (10) et une pièce de raccordement (8),
- avec au moins un outil de soudage par ultrasons (4), des moyens de pression (29) et au moins une pièce de raccordement (8),
- où au moins une partie d'une surface de contact (18) de la pièce de raccordement (8) est en contact avec au moins une partie d'une surface de contact (16) de l'outil de soudage par ultrasons (4), où
- la au moins une partie de la surface de contact (18) de la pièce de raccordement (8) et la au moins une partie de la surface de contact (16) de l'outil de soudage par ultrasons (4) ont des profilages (20, 22, 24, 26) correspondant essentiellement l'un à l'autre et
- les moyens de pression (29) sont configurés pour fixer la pièce de raccordement sur l'outil à ultrasons (4) par liaison de force sur au moins deux surfaces de la pièce de raccordement qui ne sont pas à souder.

2. Système selon la revendication 1,
**caractérisé en ce**
- **que** les profilages (20, 22, 24, 26) sont formés par des profilages ondulés (20, 22) correspondant essentiellement l'un à l'autre d'au moins une partie des surfaces de contact (16, 18) de la pièce de raccordement (8) et de l'outil de soudage par ultrasons (4).

3. Système selon la revendication 1,
**caractérisé en ce**
- **que** les profilages (20, 22, 24, 26) sont formés par des profilages striés (24, 26) correspondant essentiellement l'un à l'autre d'au moins une partie des surfaces de contact (16, 18) de la pièce de raccordement (8) et de l'outil de soudage par ultrasons (4).

4. Système selon l'une des revendications 1 à 3,
**caractérisé en ce**
- **que** le conducteur (10) est un conducteur plat ou un bus-bar et/ou
- **que** la pièce de connexion (8) est une pièce plate.

5. Système selon l'une des revendications 1 à 4,
**caractérisé en ce**
- **que** la pièce de raccordement (8) est formée d'un matériau d'aluminium ou d'un matériau d'cuivre, en particulier que la pièce de raccordement (8) est formée d'un matériau composite.

6. Système selon l'une des revendications 1 à 5,
- comprenant au moins un conducteur (10),
**caractérisé en ce**
- **que** le système de soudage (2) comprend un autre outil de soudage par ultrasons (6),
- **qu'**au moins une partie d'une surface de contact (28) de l'autre outil de soudage par ultrasons (6) est en contact avec au moins une partie d'une surface de contact du conducteur (10), et
- **que** la au moins une partie de la surface de contact (28) de l'autre outil de soudage par ultrasons (6) et/ou la au moins une partie de la surface de contact du conducteur (10) ont un autre profilage (30).

7. Système selon la revendication 6,
caractérisé en ce
- le au moins un autre profilage (30) et/ou les autres profilages sont formés par des profilages ondulés, par des profilages dentelés ou par un profilage strié.

8. Procédé de soudage pour la fabrication d'une liaison par matière entre un conducteur (10) et une pièce de raccordement (8),
- où la pièce de raccordement (8) est disposée sur au moins un outil de soudage par ultrasons (4),
- où au moins une partie d'une surface de contact de l'outil de soudage par ultrasons (4) et au moins une partie d'une surface de contact de la pièce de raccordement (8) sont en contact l'une avec l'autre,
- où au moins des parties de la surface de contact de la pièce de raccordement (8) et au moins des parties de la surface de contact de l'outil de soudage par ultrasons (4) ont des profilages correspondant les uns aux autres,
- où au moins une zone de la pièce de raccordement (8) est soudée au conducteur (10) au moyen de l'outil de soudage par ultrasons (4), où
- la au moins une partie de la surface de contact de la pièce de raccordement (8) et la au moins une partie de la surface de contact de l'outil de soudage par ultrasons (4) s'imbriquent au moins partiellement par liaison de forme et
- la pièce de raccordement (8) est fixée par liaison de force sur l'outil de soudage par ultrasons (4) par les moyens de pression (29) sur au moins deux surfaces de la pièce de raccordement (8) qui ne sont pas à souder.
